# EUROPEAN PATENT APPLICATION

(11) **EP 2 233 883 A1**
(43) Date of publication of application: **29.09.2010**
(21) Application number: 10157602.3
(22) Date of filing: 24.03.2010
(51) Int. Cl.: G01B 11/27, B23Q 17/24

(54) **Method and apparatus of measuring positional variation of rotation center line**

(30) Priority: 25.03.2009 JP 2009074467
(71) Applicant: Fujinon Corporation, Saitama-shi, Saitama (JP)
(72) Inventor: Ge, Zongtao, Saitama (JP); Takahashi, Kenichi, Saitama (JP)
(74) Representative: Klunker . Schmitt-Nilson . Hirsch

(57) **Abstract**

A measurement jig having a position indicator is set so as to rotate integrally with a sample, and a magnified image of the position indicator formed by a microscope is picked up by an imaging camera at plural time points during the rotation of the sample. A movement locus of the magnified images picked up is founded, and position variation amount of a rotation center line of the sample is calculated on the basis of the found movement locus.

## Description

### BACKGROUND OF INVENTION

### Field of the Invention

The present invention relates to a method and an apparatus of measuring positional variation (run-out) of a rotation center line of one of various types of rotators often used in machine tools, electronic devices, and the like. Particularly, a method and an apparatus suitable to measure the positional variation of a rotation center line of a rotator requiring high rotary accuracy such as a main spindle of a precision machine tool are related.

### Description of the Related Art

In a precision machine tool, such as a grinding machine, in case that the position of a rotation center line (position in the diameter direction) of a main spindle varies greatly, machining accuracy drops remarkably. Therefore, at the time of delivery and maintenance, it is necessary to check the positional variation amount of the rotation center line.

As a method of measuring such the positional variation amount of the rotation center line of the rotator such as the main spindle, a two-point method or a three-point method has been known. In these methods, plural displacement meters are arranged along the outer peripheral surface of the rotator (a method in which two displacement meters are arranged is referred to as the two-point method, and a method in which three displacement meters are arranged is referred to as the three-point method), the positional variation of the main spindle peripheral surface accompanied with the rotation of the rotator is measured by means of each displacement meter, and the positional variation of the rotation center line of the rotator is calculated on the basis of the measurement data by means of each displacement meter (refer to JP-A-06-229751, JP-A-06-235422, and JP-A-10-015705).

According to the above-mentioned methods, the positional variation amount of the rotation center line of the rotator may be measured two-dimensionally. However, since the plural displacement meters is used, in case that there are differences in property (for example, temperature property) between the displacement meters, errors caused by the differences in the property are produced between the measurement data of the displacement meters, with the result that it is difficult to obtain the measurement results having high accuracy.

### SUMMARY OF INVENTION

The invention has been made in view of such the circumstances, and an object of the invention is to provide a method and an apparatus of measuring positional variation of a rotation center line, which are capable of measuring the positional variation of the rotation center line accompanied with the rotation of a sample with high accuracy.

According to an aspect of the invention, a positional variation measuring method which measures a positional variation of a rotation center line of a sample accompanied with a rotation of the sample, which provides a microscope arranged so that an optical axis of an objective lens and the rotation center line become parallel to each other, and so that the rotation center line is located in the observed area of the microscope, and a position indicator that is set on the sample so as to be capable of rotating in the observed area integrally with the sample, and magnified with the microscope to be observed, comprises the steps of: rotating the sample to measure the positional variation of the rotation center line of the sample; picking up respectively magnified images of the position indicator formed through the objective lens at plural time points during the rotation of the sample; finding a movement locus in an imaging coordinate system of the magnified images picked up; and calculating the position variation amount of the rotation center line on the basis of the found movement locus.

According to another aspect of the invention, a positional variation measuring apparatus which measures a positional variation of a rotation center line of a sample accompanied with a rotation of the sample, the apparatus comprises: a microscope arranged so that an optical axis of an objective lens and the rotation center line become parallel to each other, and so that the rotation center line is located in an observed area of the microscope; at least one position indicator which is set on the sample so as to be capable of rotating in the observed area integrally with the sample, and magnified with the microscope to be observed; an imaging unit which picks up respectively magnified images of the position indicator formed through the objective lens at plural time points during the rotation of the sample; and an analysis unit which finds a movement locus in an imaging coordinate system of the magnified images picked up, and calculates a position variation amount of the rotation center line on the basis of the found movement locus. According to the other aspect of the invention, the plurality of position indicators are arranged in the observed area of the microscope.

In the invention, the rotation center line is defined as a line which is not fixed in space but fixed in the sample.

According to the method and the apparatus of measuring the positional variation of the rotation center line of the invention, by providing the above-mentioned constitution, the following advantage is obtained.

Namely, the movement locus of the position indicator set in the sample becomes circular in case that there is no positional variation of the rotation center line, and becomes, in case that there is the positional variation, the shape out of the circle in response to the variation amount. In the invention, since the magnified image of the position indicator is picked up by means of the microscope, and the movement locus of the position indicator is found on the basis of this magnified image, the even tiny variation of the movement locus may be captured. Accordingly, it is possible to obtain the positional variation amount of the rotation center line with the high accuracy.

Further, in the invention, the microscope is used as the only measurement system, which is different from the method in which the plural displacement meters is used as each measurement system. Therefore, there is no fear of errors caused by difference in property between the measurement systems.

### BRIEF DESCRIPTION OF THE DRAWINGS

Fig. 1 is a schematically constitutional view of an apparatus of measuring positional variation of a rotation center line according to one embodiment;
Fig. 2 is a block diagram showing schematic constitution of an analysis device shown in Fig. 1;
Fig. 3 is a plan view showing one form of a measurement jig;
Fig. 4 is a plan view showing another form of the measurement jig;
Fig. 5 is a schematic diagram showing intensity distribution of a magnified image to be picked up;
Fig. 6 is a schematic diagram showing an example of movement locus of the magnified image; and
Fig. 7 is a schematic diagram showing outline of how to find positional variation amount of the rotation center line.

### DESCRIPTION OF EXEMPLARY EMBODIMENTS

An embodiment of the invention will be described below in detail with reference to the above drawings. Each figure used in description of the embodiment does not show the detailed shape and structure of the invention, but the size of each member and distance between the members have been appropriately changed in each figure.

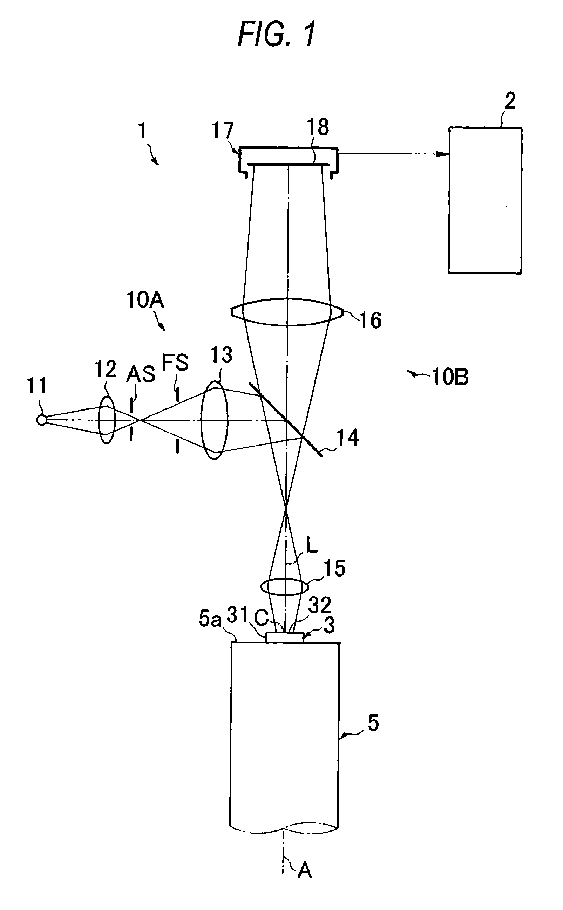

An apparatus of measuring positional variation of a rotation center line shown in Fig. 1 (which may be hereinafter referred to as an "apparatus in this embodiment") is used to measure and analyze the positional variation amount of a rotation center line A of a sample 5 (for example, a main spindle of a lathe machine) accompanied with the rotation of the sample 5, which includes a microscope 1, an analysis device 2 as an analysis unit, and a measurement jig 3 placed and fixed onto a leading end surface 5a of the sample 5. The rotation center line A of the sample 5 is treated as what is fixed to the sample 5, and the leading end surface 5a of the sample 5 is formed perpendicularly to the rotation center line A.

The above microscope 1, as shown in Fig. 1, is composed of an epi-illumination optical system 10A and an observation optical system 10B. The epi-illumination optical system 10A of these systems includes a light source 11, a collector lens 12, an aperture stop AS, a field stop FS, a field lens 13, a half mirror 14, and an objective lens 15. The epi-illumination optical system 10A is constituted so as to illuminate light beam outputted from the light source 11 onto the measurement jig 3 as illumination light. On the other hand, the observation optical system 10B includes the objective lens 15 used also in the epi-illumination optical system 10A, an imaging lens 16, an imaging camera 17 as an image pick-up unit. The observation optical system 10B is constituted so as to form a magnified image of an observational object (in the apparatus in this embodiment, a position indicator 32 described later) in an observed area of the microscope 1, onto a two-dimensional image sensor 18 (composed of CCD, CMOS, and the like) of the imaging camera 17 by the objective lens 15 and the imaging lens 16, and pick up this magnified image by the imaging camera 17.

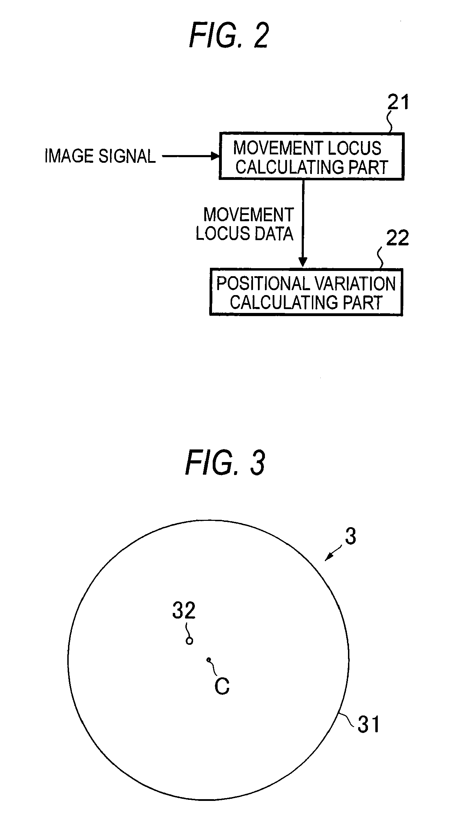

The above analysis device 2 is constituted by a computer or the like which performs image processing and various operational processing. The analysis device 2 includes a memory device which stores various programs, such as a hard disc, and a CPU which performs various operational processing, and also includes a movement locus calculating part 21 constituted by the CPU and the programs in the memory, and a positional variation calculation part 22 (refer to Fig. 2).

The above measurement jig 3, as shown in Fig. 3, includes a base plate 31, and a position indicator 32 formed in the vicinity of a center point C of the base plate 31. This position indicator 32 is constituted by a metal film of gold, aluminum, chrome, or the like formed on the base plate 31 by vapor deposition. Further, the size of this position indicator 32 may be appropriately set in response to observation magnification of the microscope 1, wavelength of the illumination light, and the like. In the apparatus in this embodiment, the observation magnification of the microscope 1 is taken as 2000 magnifications, center wavelength of the illumination light is taken as 405 nm, and the diameter of the position indicator 32 is set to about 300 nm. Further, on the surface of the base plate 31, an antireflection film is formed in other areas than an area where the position indicator 32 is formed, whereby the reflection of the illumination light is suppressed.

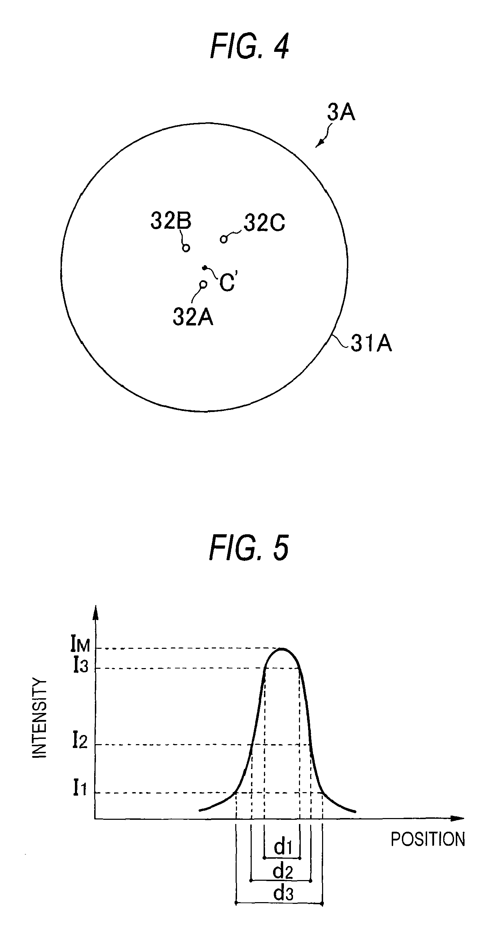

Further, in place of the measurement jig 3, a measurement jig 3A shown in Fig. 4 may be also used. This measurement jig 3A is different from the above measurement jig 3 in that three position indicators 32A to 32C are formed in the vicinity of the center point C' of a base plate 31A. Further, the three position indicators 32A to 32C are formed in positions which are different from one another in distance to the center point C'.

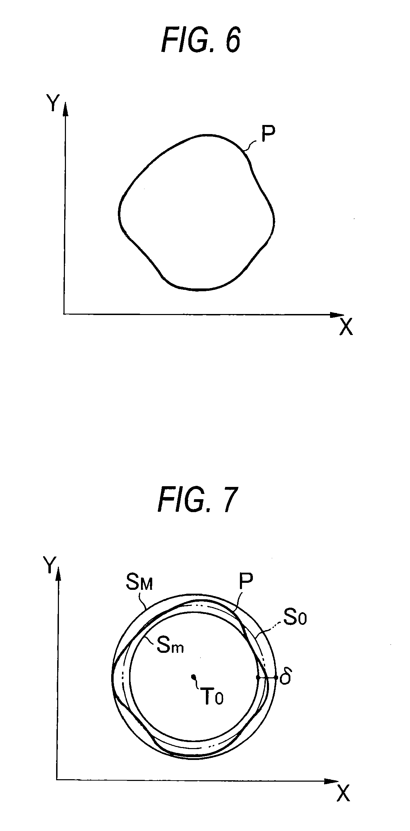

Next, a method of measuring the positional variation of a rotation center line according to one embodiment of the invention (hereinafter referred to as a method in this embodiment) will be described. The method in this embodiment is performed using the above-mentioned apparatus of measuring the positional variation of the rotation center line.
(1) The microscope 1 shown in Fig. 1 is arranged so that an optical axis L of the objective lens 15 becomes parallel to the rotation center line A of the sample 5, and so that the rotation center line A is located in the observed area of the microscope 1. In the method in this embodiment, the position of the microscope 1 is adjusted so that the above optical axis L and the above rotation center line A are superimposed on each other (this is not the indispensable feature of the invention).
(2) The measurement jig 3 shown in Fig. 3 is placed and fixed onto the leading end surface 5a of the sample 5 so that the position indicator 32 may rotate in the above observed area integrally with the sample 5 (refer to Fig. 1). Further, in the method in this embodiment, the position of the measurement jig 3 is adjusted so that the center point C of the base plate 31 of the measurement jig 3 is located on the above optical axis L (this is not the indispensable feature of the invention).
(3) The sample 5 is rotated, and the magnified image of the position indicator 32 formed on the two-dimensional image senor 18 by the objective lens 15 and the imaging lens 16 is picked up by the imaging camera 17 at the plural time points during the rotation of the sample 5. The number of image pick-up may be appropriately set in response to the rotary speed of the sample 5. In the method of this embodiment, the image is picked up 10000 times/min.
(4) A movement locus P (refer to Fig. 6) of the magnified images picked up at the plural time points is found in an imaging coordinate system appropriately set according to the two-dimensional image sensor 18. The outline of how to find this movement locus P is as follows.
   (a) First, each image data picked up is binarized, whereby the center position of the magnified image is readily specified. Though a threshold in binarization may be appropriately set in response to a relation between the size of the magnified image and pixel density of the two-dimensional image sensor 18, high setting facilitates specifying of the center position of the magnified image. For example, in case that the magnified image is taken as a circular spot image, and the intensity distribution of its spot image becomes Gaussian distribution (shown two-dimensionally) as shown in Fig. 5, when the threshold is set to I₂ where the intensity becomes 1/e (e is Napier's constant) of a maximum intensity I_{M}, and particularly when the threshold is set to I₃ where the intensity becomes 8/9 of the maximum intensity I_{M} than when the threshold is set to I₁ where the intensity becomes 1/e² of the maximum intensity I_{M}, the diameter of the magnified image after binarization becomes smaller (d₃>d₂>d₁). Therefore, specifying of the center position of the magnified image is facilitated.
   (b) Next, in the imaging coordinate system, a coordinate value of the center position (barycentric position may be taken) of the magnified image after the binarization is found for each of the above image data, and their coordinate values are connected in order of image pick-up, whereby the movement locus P is obtained. The calculation of this movement locus P is executed by the movement locus calculating means 21.
(5) On the basis of the movement locus P obtained in the above step (4), the positional variation amount δ (refer to Fig. 7) of the rotation center line A of the sample 5 is calculated. The outline of how to find this positional variation amount δ is as follows.
   (a) First, a least square circle So fitting to the movement locus P is found, and a center point To of the least square circle is specified.
   (b) Next, a large circle S_{M} which is concentric with the least square circle So (has the center point T₀) and circumscribes the movement locus P, and a small circle Sₘ which is concentric with the least square circle So (has the center point To) and inscribed in the movement locus P are found.
   (c) Next, difference of radius between the large circle S_{M} and the small circle Sₘ is calculated as the positional variation amount δ. This calculation of the positional variation amount δ is executed by the position variation calculating means 22.

Although the embodiment of the invention has been described above, the invention is not limited the above embodiment, but the form of the invention may be changed variously.

For example, although the measurement jig 3 shown in Fig. 3 is used in the embodiment, the measurement jig 3A shown in Fig. 4 may be also used in place of the measurement jig 3. Although a measurement procedure in this case is similar to the procedure in case that the measurement jig 3 is used, since the measurement jig 3A has the three position indicators 32A to 32C, three movement loci corresponding to the respective position indicators 32A to 32C are found. Therefore, each the positional variation amount (δ₁, δ₂, δ₃) is found by the above procedure for each of the three movement loci, and these positional variation amounts are averaged, whereby the positional variation amount (=(δ₁+δ₂+δ₃)/3) may be calculated.

Further, although the position indicators 32 and 32A to 32C in the measurement jigs 3 and 3A are reflection types which reflect the illumination light, a transmission type which transmits the illumination light may be also used as the position indicator. Such the transmission-type position indicator may be applied in case that positional variation of a rotation center line of a hollow sample is measured. In case that the transmission-type position indicator is used, a transmission illumination optical system (not shown) which is general as an illumination system for microscope is used in place of the above-mentioned epi-illumination optical system 10A.

Further, by using together a displacement meter (The number of displacement meters may be one. Not shown) which measures the shape of the peripheral surface of the sample, it is also possible to measure circularity of the peripheral surface of the sample.

## Claims

1. A positional variation measuring method which measures a positional variation of a rotation center line of a sample accompanied with a rotation of the sample, which provides a microscope arranged so that an optical axis of an objective lens and the rotation center line become parallel to each other, and so that the rotation center line is located in an observed area of the microscope, and a position indicator that is set on the sample so as to be capable of rotating in the observed area integrally with the sample, and magnified with the microscope to be observed, comprising the steps of:
rotating the sample to measure the positional variation of the rotation center line of the sample;
picking up respectively magnified images of the position indicator formed through the objective lens at plural time points during the rotation of the sample;
finding a movement locus in an imaging coordinate system of the magnified images picked up; and
calculating the position variation amount of the rotation center line on the basis of the found movement locus.

2. A positional variation measuring apparatus which measures a positional variation of a rotation center line of a sample accompanied with a rotation of the sample, the apparatus comprising:
a microscope arranged so that an optical axis of an objective lens and the rotation center line become parallel to each other, and so that the rotation center line is located in an observed area of the microscope;
at least one position indicator which is set on the sample so as to be capable of rotating in the observed area integrally with the sample, and magnified with the microscope to be observed;
an imaging unit which picks up respectively magnified images of the position indicator formed through the objective lens at plural time points during the rotation of the sample; and
an analysis unit which finds a movement locus in an imaging coordinate system of the magnified images picked up, and calculates a position variation amount of the rotation center line on the basis of the found movement locus.

3. The positional variation measuring apparatus according to Claim 2, wherein a plurality of position indicators are arranged in the observed area of the microscope.
